# EUROPÄISCHE PATENTSCHRIFT

(11) **EP 1 965 886 B1**
(45) Veröffentlichungstag und Bekanntmachung des Hinweises auf die Patenterteilung: **22.07.2009**
(21) Anmeldenummer: 06805769.4
(22) Anmeldetag: 19.09.2006
(51) Int. Cl.: B01D 46/24, B01D 46/42, B01D 27/10, B01D 35/14, B60T 17/00

(54) **VERFAHREN ZUM ERKENNEN VON EIGENSCHAFTEN EINER LUFTFILTERPATRONE**
METHOD FOR IDENTIFYING THE CHARACTERISTICS OF AN AIR FILTER CARTRIDGE
PROCÉDÉ POUR IDENTIFIER LES PROPRIÉTÉS D'UNE CARTOUCHE DE FILTRE À AIR

(30) Priorität: 20.10.2005 DE 102005050635
(43) Veröffentlichungstag der Anmeldung: 10.09.2008
(60) Teilanmeldung: 09000489.6
(73) Patentinhaber: KNORR-BREMSE Systeme für Nutzfahrzeuge GmbH, 80809 München (DE)
(72) Erfinder: UHLAND, Matthias, 89073 Ulm (DE); HILBERER, Eduard, 68766 Hockenheim (DE); KROCKENBERGER, Klaus, 90547 Stein (DE)
(74) Vertreter: Mattusch, Gundula
(86) Internationale Anmeldenummer: PCT/EP2006/009092
(87) Internationale Veröffentlichungsnummer: WO 2007/045318

(56) Entgegenhaltungen:
- EP-A- 1 048 336
- EP-A- 1 498 171
- EP-A2- 1 479 428
- WO-A-00/32298
- WO-A-02/074418
- DE-A1- 10 151 270
- DE-A1- 10 160 429
- DE-A1- 10 359 739

## Beschreibung

Die Erfindung betrifft ein Verfahren zum Erkennen von Eigenschaften einer Luftfilterpatrone zur Montage an einer Luftaufbereitungsvorrichtung eines Nutzfahrzeugs.

Zahlreiche Funktionen in Nutzfahrzeugen beruhen auf der Verwendung von Druckluft. Als Druckluftverbraucher kommen beispielsweise pneumatische Bremsanlagen, Luftfederungen und Liftachseinrichtungen in Frage. Diesen und anderen Verbrauchern wird die Druckluft über eine Luftaufbereitungsvorrichtung zur Verfügung gestellt. Moderne Luftaufbereitungseinrichtungen arbeiten auf der Grundlage einer elektronischen Steuerung, und sie enthalten für den Betrieb des pneumatischen Systems des Nutzfahrzeugs wichtige Komponenten, beispielsweise einen Druckregler, ein Mehrkreisschutzventil und eine Luftfilterpatrone. Die Luftfilterpatrone dient insbesondere dazu, die vom Kompressor geförderte Luft zu trocknen und zu reinigen.

Üblicherweise werden die Luftfilterpatronen auf das Ventilgehäuse der Luftaufbereitungseinrichtung aufgeschraubt, wobei im Sinne einer Standardisierung und einer Optimierung der Anschlusseigenschaften die Anschlussmaße festgelegt sind. Da das Anschlussgewinde festigkeitsoptimiert ist, lässt es sich in der Gewindeart und im Gewindedurchmesser nicht beliebig verändern.

Trotz dieser identischen Anschlussmaße existieren durchaus unterschiedliche Luftfilterpatronen, die insbesondere verschiedene Wirkungsweisen und/oder verschiedene Trocknungsbeziehungsweise Reinigungsleistungen aufweisen. Angesichts der identischen Anschlussbedingungen ist dies problematisch, denn es kann so immer wieder vorkommen, dass im Zuge einer Reparatur oder eines Service beim Filterpatronentausch Patronen mit Eigenschaften aufgeschraubt werden, die mit dem Luftaufbereitungssystem des Nutzfahrzeugs nicht oder nur schlecht kompatibel sind. Durch die falsche Wirkungsweise wird die Laufleistung des Systems erheblich reduziert. Dies wird schlimmstenfalls dann erst im Schadensfall bemerkt.

Neben der dargestellten Problematik besteht weiterhin ein Bedürfnis, den Wechsel einer Luftfilterpatrone zum richtigen Zeitpunkt vorzunehmen, das heißt nicht zu spät, um so die Funktionstüchtigkeit der Druckluftversorgung aufrechtzuerhalten, aber auch nicht zu früh, um so nicht eine eigentlich noch funktionstüchtige Luftfilterpatrone entsorgen zu müssen.

Aus der WO 02/074418 A1 ist bereits bekannt, einen Druckluftfilter mit einem Transponder auszustatten, wobei ein Lesegerät vorgesehen sein kann, mit welchem bei jedem Wechsel eines Filterelements gleichzeitig auch die richtige Datenbasis zur Verfügung gestellt wird.

Der Erfindung liegt die Aufgabe zugrunde, sicherzustellen, dass der Wechsel von Luftfilterpatronen fehlerfrei und zum optimalen Zeitpunkt erfolgt und dass eine sichere flexiblere Datenbasis in der Erfassungseinrichtung zur Verfügung gestellt wird, wodurch auch ursprünglich nicht vorgesehene nicht typgleiche Filterelemente optimal betrieben werden können.

Diese Aufgabe wird mit den Merkmalen der unabhängigen Ansprüche gelöst.

Vorteilhafte Ausführungsformen der Erfindung sind in den abhängigen Ansprüchen angegeben.

Die Erfindung besteht in einem Verfahren zum Erkennen von Eigenschaften einer Luftfilterpatrone zur Montage an einer Luftaufbereitungsvorrichtung eines Nutzfahrzeugs, wobei die Luftfilterpatrone Identifikationsmittel aufweist, deren Informationsgehalt durch eine Erfassungseinrichtung erfasst wird, wobei die Identifikationsmittel einen Transponder umfassen, wobei der Transponder einen Code enthält, der durch eine elektromagnetische Erfassungseinrichtung ausgelesen wird, wobei nach Einschalten der Zündung des Nutzfahrzeugs von einer Sende- und Empfangsantenne der Erfassungseinrichtung ein elektromagnetisches Feld im Bereich des Transponders aufgebaut wird, wobei der Transponder veranlasst durch das elektromagnetische Feld einen Code enthaltende elektromagnetische Strahlung aussendet, wobei die von dem Transponder ausgesendete elektromagnetische Strahlung durch die Sende- und Empfangsantenne der Erfassungseinrichtung erfasst wird, wobei der Code mit gespeicherten Daten verglichen wird, und wobei durch die Betätigung eines nicht ohne weiteres zugänglichen Tasters veranlasst wird, dass in dem Transponder vorhandene Informationen in einen Speicher der Erfassungseinrichtung übernommen werden. Aufgrund der Erfassung von Informationen, die der Luftfilterpatrone zugeordnet sind, kann sowohl überwacht werden, dass beim Wechsel der Luftfilterpatrone keine falsche Luftfilterpatrone aufgeschraubt wird, als auch sichergestellt werden, dass eine Luftfilterpatrone zum richtigen Zeitpunkt gewechselt wird. Durch den Vergleich des Codes mit den gespeicherten Daten kann dann insbesondere ermittelt werden, ob eine Luftfilterpatrone vom richtigen Typ aufgeschraubt ist.

Gemäß einer weiteren Ausführungsform des Verfahrens ist vorgesehen, dass die Identifikationsmittel einen Barcode umfassen, der durch eine optische Erfassungseinrichtung ausgelesen wird.

Im Hinblick auf die Ausrüstung der Luftaufbereitungsvorrichtung mit einer Luftfilterpatrone vom richtigen Typ ist vorgesehen, dass die Identifikationsmittel Informationen über den Typ der Luftfilterpatrone enthalten und dass im Falle einer Abweichung von einem vorgesehenen Typ ein Warnsignal erzeugt wird. Beim Vorliegen eines solchen Warnsignals ist somit dafür Sorge zu tragen, eine Luftfilterpatrone von einem anderen Typ aufzuschrauben, so dass dann kein Warnsignal mehr vorliegt.

Im Hinblick auf die Optimierung der Wartung ist nützlicherweise vorgesehen, dass die Identifikationsmittel die Luftfilterpatrone individuell kennzeichnen und dass die auf der Grundlage der individuellen Kennzeichnung verfügbare Information im Hinblick auf die Wartung der Luftaufbereitungsanlage berücksichtigt wird.

Es wird darüber hinaus eine Luftfilterpatrone zur Montage an einer Luftaufbereitungsvorrichtung eines Nutzfahrzeugs beschrieben.

Nützlicherweise ist vorgesehen, dass die Identifikationsmittel einen Transponder umfassen, wobei der Transponder einen Code enthält, der durch eine elektromagnetische Erfassungseinrichtung auslesbar ist. Mit einem solchen Transponder bedient man sich einer allgemein verfügbaren Technologie, um der Luftfilterpatrone die geforderten Eigenschaften zu vermitteln.

Es ist besonders bevorzugt, dass die Erfassungseinrichtung in ein Steuergerät der Luftaufbereitungseinrichtung integriert ist. Moderne Luftaufbereitungsanlagen verfügen über ein elektronisches Steuergerät, das zahlreiche Grundfunktionen der Druckluftversorgung steuert. Ein solches Steuergerät verfügt unter anderem über einen Mikrocontroller, Speichervorrichtungen und eine Datenschnittstelle, so dass es auf dieser Grundlage geeignet ist, die durch die Erfassungseinrichtung erfassten Daten auszuwerten und zur beliebigen Weiterverarbeitung zur Verfügung zu stellen.

Es kann weiterhin vorgesehen sein, dass die Identifikationsmittel Informationen über den Typ der Luftfilterpatrone enthalten. Durch die Information über den Typ kann sichergestellt werden, dass eine Filterpatrone nur durch eine typgleiche Filterpatrone ersetzt werden darf.

Möglich ist auch, dass die Identifikationsmittel die Luftfilterpatrone individuell kennzeichnen. Diese individuellen Informationen können besonders nützlich im Hinblick auf die Sicherstellung der geeigneten Serviceintervalle genutzt werden.

Die Erfindung wird nun mit Bezug auf die begleitenden Zeichnungen anhand besonders bevorzugter Ausführungsformen beispielhaft erläutert.

Es zeigen:
Figur 1 eine Luftaufbereitungsvorrichtung mit Luftfilterpatrone und deren datenmäßige Anbindung an weitere Komponenten eines Nutzfahrzeugs;
Figur 2 einen Teil einer Luftaufbereitungsvorrichtung mit Luftfilterpatrone und insbesondere die Anordnung von Identifikationsmitteln und einer Erfassungseinrichtung und
Figur 3 eine schematische Darstellung eines Bordrechners, eines Steuergerätes und weiterer Komponenten eines Nutzfahrzeugs sowie die Kommunikation dieser Komponenten untereinander.

Bei der nachfolgenden Beschreibung von bevorzugten Ausführungsformen der Erfindung bezeichnen gleiche Bezugszeichen gleiche oder vergleichbare Komponenten. Die Erfindung wird beispielhaft anhand einer Luftfilterpatrone mit einem Transponder beschrieben, wobei grundsätzlich jegliche Identifikationsmittel im Rahmen der Erfindung zum Einsatz kommen können, die durch eine Erfassungseinrichtung automatisch auslesbar sind.

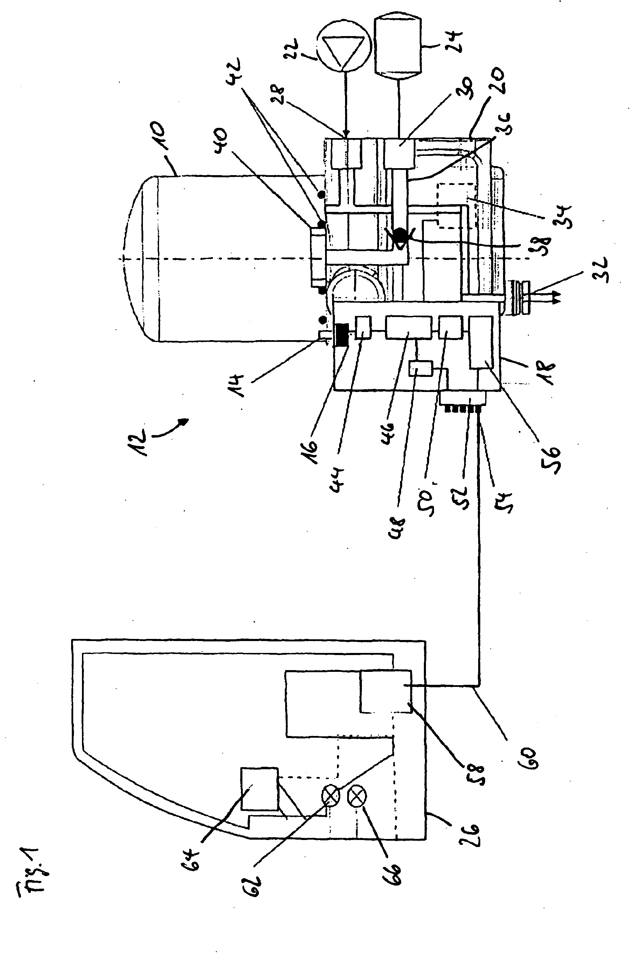

Figur 1 zeigt eine Luftaufbereitungsvorrichtung mit Luftfilterpatrone und deren datenmäßige Anbindung an weitere Komponenten eines Nutzfahrzeugs. Die Luftaufbereitungsvorrichtung 12 umfasst als wesentliche Bestandteile eine Filterpatrone 10, ein Ventilgehäuse 20 mit darin angeordneten pneumatischen, elektrischen und elektropneumatischen Komponenten und ein an dem Ventilgehäuse angeordnetes Steuergerät 18. In der Peripherie der Luftaufbereitungsvorrichtung 12 sind ein Kompressor 22 zur Bereitstellung von Druckluft, ein für mehrere Vorratsbehälter beispielhaft dargestellter Vorratsbehälter 24 und eine Fahrerkabine 26 zu erkennen.

Im Bereich des Ventilgehäuses 20 sind ein Förderleitungsanschluss 28, ein Verbraucheranschluss 30, eine Entlüftung 32 und ein Ablassventil 34 enthalten. Es sind weiterhin Kanäle erkennbar, die von Druckluft durchströmbar sind, wobei in dem Kanal 36 ein Rückschlagventil 38 vorgesehen ist, das eine Strömung von der Filterpatrone 10 zum Verbraucheranschluss 30 zulässt und eine umgekehrte Strömung unterbindet.

Die Filterpatrone 10 ist über ein Anschlussgewinde 40 mit dem Ventilgehäuse 20 verbunden, wobei diese Verbindung über Dichtungen 42 abgedichtet ist.

Das Steuergerät 18 enthält eine Erfassungseinrichtung 16 mit einer Sende- und Empfangsantenne, einen damit in Verbindung stehenden Decoder 44, einen mit dem Decoder 44 in Verbindung stehenden Mikrocontroller 46, eine Schnittstelle 48 zur seriellen Kommunikation, einen Stecker 52, der unter anderem einen Anschluss 54 für die serielle Kommunikation aufweist, einen Schreib- und Lesespeicher 50 und ein Netzteil 56. Diese und andere Komponenten dienen der Steuerung der Druckluftversorgung sowie der Erkennung von Eigenschaften der Luftfilterpatrone 10.

Das beschriebene System arbeitet wie folgt. Nach Einschalten der Zündung erzeugt die Sende- und Empfangsantenne der Erfassungseinrichtung 16 im Bereich des auf die Filterpatrone 10 aufgeklebten oder in dieser eingestemmten Transponders elektrische Strahlung mit einer bestimmten Frequenz. Die elektromagnetischen Wellen werden von dem Transponder 14 entsprechend zu einem gespeicherten Code moduliert und reflektiert. Zu diesem Zweck kann ein passiver Transponder 14 eingesetzt werden, der ohne eine eigene Energieversorgung auskommt. Die Erfassungseinrichtung überträgt die empfangenen Signale an den Decoder 44. Nachfolgend wird eine Plausibilitätsprüfung vorgenommen, indem von dem Decoder 44 decodierte Signale mit in dem Speicher 46 gespeicherten Daten verglichen werden. Die für diese Belange erforderlichen Mittel können in dem Mikrocontroller 46 implementiert sein. Stimmen die decodierten Daten nicht mit den gespeicherten Daten überein, so sendet das Steuergerät über die Schnittstelle 58 und den Stecker 52 beziehungsweise dessen Anschluss für die serielle Kommunikation 54 entsprechende Informationen an einen im Führerhaus 26 angeordneten Bordrechner 58. Diese Übertragung kann über den CAN-Bus 60 des Nutzfahrzeugs erfolgen. Der Bordrechner 58 kann nun eine Warnlampe 62 ansteuern sowie entsprechende Informationen auf einem Anzeige- und Diagnosedisplay 64 anzeigen, wobei das Anzeige- und Diagnosedisplay vorzugsweise mit einem Steuergerät ausgestattet ist. Die Warnlampe 62, die eine fehlerhafte Luftfilterpatrone 10 anzeigt, kann im Bereich anderer Anzeigen 66 innerhalb der Fahrerkabine angeordnet sein.

Wie oben beschrieben, kann die Überprüfung des Typs der Filterpatrone 10 immer dann erfolgen, wenn die Zündung des Fahrzeugs eingeschaltet wird. Es ist aber auch denkbar, dass die Prüfung durch andere Ereignisse veranlasst wird, beispielsweise immer beim Einschrauben der Filterpatrone 10 stattfindet oder durch das Betätigen eines Tasters in Gang gesetzt wird.

Es wurde erläutert, dass in dem Speicher 50 Daten gespeichert sind, mit denen der decodierte Code des Transponders 14 verglichen wird. Es ist möglich, dass diese Daten im Speicher 50 unveränderlich gespeichert sind. Ebenfalls ist es denkbar, diese Daten durch äußeren Eingriff zu ändern, beispielsweise im Rahmen einer Wartung. Eine weitere Möglichkeit zur Änderung der Daten kann vorgesehen sein, nämlich durch Übernahme der im Transponder vorhandenen Informationen in den Speicher. Letzteres kann nützlich sein, wenn für eine bestimmte Luftaufbereitungseinrichtung eine andersartige Filterpatrone 10 zum Einsatz kommen soll. Es reicht dann aus, die neuartige Filterpatrone 10 einzusetzen und durch beispielsweise die Betätigung eines nicht ohne Weiteres zugänglichen Tasters zu veranlassen, dass in dem Speicher Daten abgelegt werden, die der Information im Transponder 14 der neuen Filterpatrone 10 entsprechen.

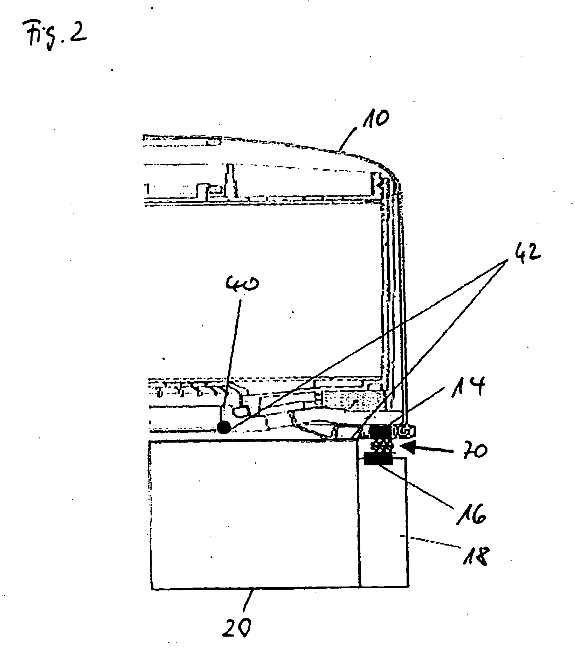

Figur 2 zeigt einen Teil einer Luftaufbereitungsvorrichtung mit Luftfilterpatrone und insbesondere die Anordnung von Identifikationsmitteln und einer Erfassungseinrichtung. Es ist zu erkennen, dass der Transponder 14 und die Sende- und Empfangsantenne der Erfassungseinrichtung 16 gegenüberliegend angeordnet sind, um so eine möglichst kurze Funkstrecke 70 zu realisieren. Auf dieser Grundlage kommt man mit geringen Sendeleistungen aus, was im Hinblick auf die weiteren elektronischen Komponenten in dem Steuergerät 18 nur von Vorteil sein kann.

Figur 3 zeigt eine schematische Darstellung eines Bordrechners, eines Steuergerätes und weiterer Komponenten eines Nutzfahrzeugs, sowie die Kommunikation dieser Komponenten untereinander. Neben der beschriebenen Überwachung des richtigen Filterpatronentyps dient das dargestellte System auch der Optimierung der Wartung. Zu diesem Zweck enthält das Steuergerät 18 Daten, wie die Echtzeit, das Datum und den Kilometerstand des Nutzfahrzeugs. Weitere Daten können vorhanden sein, wie eine noch maximal zulässige Fahrstrecke beziehungsweise Betriebszeit. Im Falle eines Werkstattbesuchs kann weiterhin ein Service-Reset gespeichert werden. In dem Falle, dass die Luftfilterpatrone 10 gewechselt wurde, sendet das Steuergerät 18 eine Resetanforderung, um die Daten im Wortrechner 58 zurückzusetzen.

Figur 3 zeigt neben dem Steuergerät 18, dem Bordrechner 58, und der Einheit mit Warnlampe 62 und Anzeige- und Diagnosedisplay eine Motormanagementeinheit 68 sowie die zwischen den einzelnen Komponenten ausgetauschten Signale. Diese Signale sind im Einzelnen ein Service-Reset S01, eine Rücksetzanforderung S02, die Information über den nächsten Filterpatronenwechsel beziehungsweise die maximal noch zulässige Kilometerleistung S03 und Signale bezüglich Echtzeit, Datum, Kilometerstand usw. S04. Die Signale S01 und S04 werden von dem Bordrechner 58 an das Steuergerät 18 übergeben, während die Signale S02 und S03 von dem Steuergerät an den Bordrechner übergeben werden. Ein weiteres Signal S05, nämlich die Motordrehzahl wird dem Steuergerät 18 von der Motormanagementeinheit 68 zur Verfügung gestellt. Ein Signal S06 kann im Falle einer falschen Filterpatrone vom Bordrechner 58 an die Einheit mit Display 64 und Warnlampe 62 übergeben werden. Auf der Grundlage dieses Signalaustauschs führt das Steuergerät 18 die folgenden Funktionen aus:
- Abschätzen der Filterpatronenabnutzung unter Berücksichtigung von Informationen der Motormanagementeinheit 68 und der Laufzeit.
- Ermittlung der noch maximal zulässigen Laufzeit des Filters.
- Überprüfung, ob der Filterwechsel bereits vollzogen wurde.
- Überprüfung, ob die passende Filterpatrone eingesetzt wurde.
- Verknüpfung der Daten mit der Kilometerinformation und der Echtzeitinformation.
- Anpassen des Regenerationsverhaltens.

Der Bordrechner 58 verwaltet im Wesentlichen die folgenden Informationen:
- Fahrerinformationen.
- Warnungen.
- Das Servicemanagement.
- Informationen bezüglich des normalen oder des reduzierten Serviceintervalls.

Die Informationen im Hinblick auf das normale oder reduzierte Serviceintervall resultieren aus der Anpassung des Regenerationsverhaltens, nämlich dadurch, dass bei reduziertem Wirkungsgrad der Filterpatrone die Regenerationsluftmenge erhöht wird.

Für den Fall, dass ein Service empfohlen wird, kombiniert der Bordrechner dies mit weiteren, von anderen Steuergeräten aufgelaufenen Serviceempfehlungen und sendet an das Display 64 eine Vorwarnung oder eine Warnung. Entsprechend werden Anzeigen ausgegeben.

Wird ein Serviceaufenthalt abgeschlossen, so werden die entsprechenden Daten der gewarteten Einheiten über Offboarddiagnose zurückgesetzt. Wurde die Filterpatrone gewechselt, so erkennt dies das Steuergerät 18 des Lufttrockners auf der Grundlage der individuellen im Transponder gespeicherten Informationen, oder dem Steuergerät wird diese Information auf andere Weise übermittelt.

In dem Fall, dass während des Service ein Filter falscher Bauweise aufgeschraubt wurde, wird dies ebenfalls durch das Steuergerät 18 erkannt, und an den Bordrechner 58 wird eine Fehlermeldung gesendet. Diese Fehlermeldung wird im Rahmen der Offboarddiagnose dokumentiert.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein.

### Bezugszeichenliste:

- 10: Filterpatrone
- 12: Luftaufbereitungsvorrichtung
- 14: Identifikationsmittel
- 16: Erfassungseinrichtung
- 18: Steuergerät
- 20: Ventilgehäuse
- 22: Kompressor
- 24: Vorratsbehälter
- 26: Fahrerkabine
- 28: Förderleitungsanschluss
- 30: Verbraucheranschluss
- 32: Entlüftung
- 34: Ablassventil
- 36: Kanal
- 38: Rückschlagventil
- 40: Anschlussgewinde
- 42: Dichtungen
- 44: Decoder
- 46: Mikrocontroller
- 48: Schnittstelle
- 50: Schreib- und Lesespeicher
- 52: Stecker
- 54: Anschluss
- 56: Netzteil
- 58: Bordrechner
- 60: CAN-Bus
- 62: Warnlampe
- 64: Anzeige
- 66: weitere Anzeigen
- 68: Motormanagementeinheit
- 70: Funkstrecke

## Patentansprüche

1. Verfahren zum Erkennen von Eigenschaften einer Luftfilterpatrone (10) zur Montage an einer Luftaufbereitungsvorrichtung (12) eines Nutzfahrzeugs,
- wobei die Luftfilterpatrone Identifikationsmittel (14) aufweist, deren Informationsgehalt durch eine Erfassungseinrichtung (16) erfasst wird,
- wobei die Identifikationsmittel einen Transponder (14) umfassen, wobei der Transponder einen Code enthält, der durch eine elektromagnetische Erfassungseinrichtung (16) ausgelesen wird,
- wobei nach Einschalten der Zündung des Nutzfahrzeugs von einer Sende- und Empfansantenne der Erfassungseinrichtung (16) ein elektromagnetisches Feld im Bereich des Transponders (14) aufgebaut wird,
- wobei der Transponder (14) veranlasst durch das elektromagnetische Feld einen Code enthaltende elektromagnetische Strahlung aussendet,
- wobei die von dem Transponder (14) ausgesendete elektromagnetische Strahlung durch die Sende- und Empfangsantenne der Erfassungseinrichtung (16) erfasst wird, und
- wobei der Code mit gespeicherten Daten verglichen wird,
**dadurch gekennzeichnet, dass** durch die Betätigung eines nicht ohne weiteres zugänglichen Tasters veranlasst wird, dass in dem Transponder vorhandene Informationen in einen Speicher der Erfassungseinrichtung übernommen werden.

2. Verfahren nach Anspruch 1, **dadurch gekennzeichnet, dass** die Identifikationsmittel (14) Informationen über den Typ der Luftfilterpatrone (10) enthalten und dass im Falle einer Abweichung von einem vorgesehenen Typ ein Warnsignal erzeugt wird.

3. Verfahren nach einem der Ansprüche 1 oder 2, **dadurch gekennzeichnet, dass** die Identifikationsmittel (14) die Luftfilterpatrone (10) individuell kennzeichnen und dass die auf der Grundlage der individuellen Kennzeichnung verfügbare Information im Hinblick auf die Wartung der Luftaufbereitungsanlage (12) berücksichtigt wird.

## Claims

1. A method for detecting properties of an air filter cartridge (10) for mounting on an air purification device (12) of a utility vehicle,
- wherein the air filter cartridge has identification means (14) whose information content is sensed by a sensing device (16),
- wherein the identification means comprise a transponder (14), wherein the transponder contains a code which is read out by means of an electromagnetic sensing device (16),
- wherein after the ignition of the utility vehicle has been switched on, a transmitting and receiving antenna of the sensing device (16) sets up an electromagnetic field in the region of the transponder (14),
- wherein the transponder (14) emits electromagnetic radiation containing a code, prompted by the electromagnetic field,
- wherein the electromagnetic radiation which is emitted by the transponder (14) is sensed by the transmitting and receiving antenna of the sensing device (16),
- wherein the code is compared with stored data,
**characterized in that** activation of a momentary contact switch which is not readily accessible causes information which is present in the transponder to be transferred into a memory of the sensing device.

2. The method as claimed in claim 1, **characterized in that** the identification means (14) contain information about the type of air filter cartridge (10), and **in that** a warning signal is generated if there is a deviation from a predefined type.

3. The method as claimed in one of claims 1 or 2, **characterized in that** the identification means (14) individually characterize the air filter cartridge (10), and **in that** the information which is available on the basis of the individual characterization is taken into account in the maintenance of the air purification system (12).

## Revendications

1. Procédé pour connaître les propriétés d'une cartouche (10) de filtre à air à monter sur un dispositif (12) de préparation d'air d'un véhicule utilitaire,
dans lequel la cartouche de filtre à air a des moyens (14) d'identification, dont le contenu informatique est détecté par un dispositif (16) de détection,
dans lequel les moyens d'identification comprennent un transpondeur (14), le transpondeur comportant un code qui est lu par un dispositif (16) électromagnétique de détection,
dans lequel, après l'allumage du véhicule utilitaire, il est formé par une antenne d'émission et de réception du dispositif (16) de détection un champ électromagnétique dans la zone du transpondeur (14),
dans lequel le transpondeur (14) excité par le champ électromagnétique émet un rayonnement électromagnétique contenant un code,
dans lequel le rayonnement électromagnétique émis par le transpondeur (14) est détecté par l'antenne d'émission et de réception du dispositif (16) de détection, et
dans lequel le code est comparé à des données mémorisées,
**caractérisé en ce qu'**il est provoqué par l'actionnement d'un touche qui n'est pas accessible sans autre difficulté que des informations présentes dans le transpondeur soient prises en charge dans une mémoire du dispositif de détection.

2. Procédé suivant la revendication 1, **caractérisé en ce que** les moyens (14) d'identification contiennent des informations sur le type de la cartouche (10) de filtre à air et **en ce que**, dans le cas où l'on s'écarte d'un type prévu, il est prévu un signal d'avertissement.

3. Procédé suivant l'une des revendications 1 ou 2, **caractérisé en ce que** les moyens (14) d'identification caractérisent individuellement la cartouche (10) de filtre à air et **en ce que** l'information disponible sur la base de la caractérisation individuelle est prise en compte pour l'entretien de l'installation (12) de préparation de l'air.
